Europäisches Patentamt

European Patent Office

Office européen des brevets

(11) Veröffentlichungsnummer: **0 161 467**
**B1**

# EUROPÄISCHE PATENTSCHRIFT

(45) Veröffentlichungstag der Patentschrift:
**07.12.88**

(21) Anmeldenummer: **85104146.7**

(22) Anmeldetag: **04.04.85**

(51) Int. Cl.⁴: **C 02 F 9/00, C 02 F 1/28**

(54) Vorrichtung zur Wasserreinigung.

(30) Priorität: **13.04.84 DE 3413948**

(43) Veröffentlichungstag der Anmeldung:
**21.11.85 Patentblatt 85/47**

(45) Bekanntmachung des Hinweises auf die Patenterteilung:
**07.12.88 Patentblatt 88/49**

(84) Benannte Vertragsstaaten:
**AT BE CH DE FR GB IT LI LU NL SE**

(56) Entgegenhaltungen:
**DE-A- 2 163 836**
**FR-A- 2 392 940**
**NL-A- 294 445**
**US-A- 1 483 498**
**US-A- 2 017 456**

(73) Patentinhaber: **Hankammer, Heinz,
Baumgartenstrasse 51, D-6204 Taunusstein 4 (DE)**

(72) Erfinder: **Hankammer, Heinz, Baumgartenstrasse 51,
D-6204 Taunusstein 4 (DE)**

(74) Vertreter: **Seiffert, Klaus et al,
Gustav-Freytag-Strasse 25 Postfach 6145,
D-6200 Wiesbaden 1 (DE)**

## Beschreibung

Die Erfindung betrifft eine Vorrichtung zur Wasserreinigung, bestehend aus einem Auffangbehälter mit Ausgießtülle und Griff, einem Trichter und einem den Trichter verschließenden Deckel, wobei am Boden des Trichters eine Öffnung zur Aufnahme einer ein Reinigungsmittel einhaltenden Filterpatrone angebracht ist.

Derartige Wasserreinigungsvorrichtungen sind bekannt. Es gibt solche, bei welchen der Trichter eine Hülse angesetzt hat, in welche das Reinigungsmittel lose eingefüllt wird und der danach oben durch ein Sieb verschlossen wird. Es gibt auch solche Vorrichtungen, bei welchen eine allseitig geschlossene Filterpatrone am Trichter durch dichtendes Anklemmen befestigt wird. Im Zusammenhang mit der Patrone versteht es sich, daß an den beiden (dem oberen und dem unteren) Enden der gefüllten Hülse siebartige Verschlußteile angeordnet sind. Innerhalb der Hülse und der Verschlußteile ist ein Aufnahmeraum für ein körniges, in Wasser nicht lösliches Reinigungsmittel vorgesehen. Es hat sich gezeigt, daß der Endverbraucher die Filterpatrone nicht immer vorschriftsmäßig füllt. Es ist daher bevorzugt, eine bereits gefüllte Filterpatrone für den Einsatz am Trichter vorzusehen. Dadurch wird eine größtmögliche Hygiene, insbesondere Vermeidung unerwünschter Verkeimung, erreicht.

Bei den bisherigen Wasserreinigungsvorrichtungen wurde der Trichter mit unten angesetzter Filterpatrone auf einen Auffangbehälter aufgelegt, so daß sich sowohl beim Öffnen als auch beim Ausgießen und Verschließen erhebliche Nachteile der Handhabung ergeben haben. Die einzelnen Teile, wie Auffangbehälter, Trichter und Deckel, waren derart lose nur aufeinander aufgelegt, daß der Endverbraucher nicht eine praktische und kompakte Vorrichtung zur Verfügung hatte. Außerdem machte häufig die ungünstige Gewichtsverteilung bei der Handhabung und insbesondere dem Ausgießen Schwierigkeiten, weil das Reinigungsmittel in der Filterpatrone und beim Ausgießen auch die Flüssigkeit vom Griff verhältnismäßig weit entfernt waren, so daß sich ungünstige Kippverhältnisse ergeben haben.

Der Erfindung liegt daher die Aufgabe zugrunde, eine Wasserreinigungsvorrichtung der eingangs genannten Art vorzusehen, die preisgünstig herstellbar und für den Endverbraucher praktisch zu benutzen ist, d.h. insbesondere leicht zu öffnen, zu befüllen und bei günstiger Gewichtsverteilung bequem zu entleeren.

Diese Aufgabe wird erfindungsgemäß dadurch gelöst, daß der Trichter herausnehmbar wenigstens teilweise in dem annähernd zylindrisch geformten Auffangbehälter angeordnet ist und in passender Weise annähernd zylinderförmige Trichterwandungen, ein für die Anordnung am angeformten Griff des Auffangbehälters angeordnetes Ansatzstück und die Bodenöffnung exzentrisch auf der Seite des Ansatzstückes aufweist und am ausgießseitigen Ende im Bereich der am Auffangbehälter angeformten, weiten, kegelförmigen Ausgießtülle mit einer Ausbuchtung versehen ist und daß der Deckel einen unteren Dichtkonus, auf der Oberseite einen Griffknopf und hinten für die wenigstens teilweise Anordnung im Griff des Auffangbehälters ein Ansatzteil aufweist. Die neue Wasserreinigungsvorrichtung ist dadurch kompakter aufgebaut und für den Endverbraucher günstiger zu benutzen. Die im Handel erworbene neue Filterpatrone wird in die Bodenöffnung des Trichters eingesetzt und kann vom Endverbraucher insofern leichter gehandhabt werden, weil die Bodenöffnung exzentrisch im Trichter, nämlich auf der Seite des Ansatzstückes oder auch des Griffes am Auffangbehälter angeordnet ist. Mit anderen Worten ist die verhältnismäßig schwere Patrone näher am Griff angeordnet, wodurch sich ersichtlich bessere Bewegungsmöglichkeiten ergeben.

Die gesamte Reinigungsvorrichtung kann aus Kunststoff hergestellt werden, so daß sowohl der Auffangbehälter als auch der Trichter und der Deckel im Spritzgußverfahren preisgünstig herstellbar sind.

Während früher die bekannten Trichter auf dem Auffangbehälter außen lose aufgelegt werden, befindet sich der Trichter erfindungsgemäß nun wenigstens teilweise innerhalb des Auffangbehälters. Auch dadurch werden die Schwerpunktverhältnisse günstiger und die Bewegungsmöglichkeit für den Endverbraucher erleichtert. Das Ansatzstück am Trichter dient dem Zentrieren bzw. zeigt dem Endverbraucher in einfacher und logischer Weise, wie das ausgießseitige Ende des Trichters dem des Auffangbehälters zuzuordnen ist. Damit wird auch die Ausbuchtung des Trichters an der richtigen Stelle plaziert, so daß eine Erleichterung des Ausgießens möglich ist.

Das Befüllen der Wasserreinigungsvorrichtung mit zu reinigendem Wasser erfolgt von oben nach dem Abnehmen des Deckels mit Hilfe des Griffknopfes. Das Wasser läuft aus dem gefüllten Trichter durch die in dessen Bodenöffnung dichtend eingeklemmte Filterpatrone in den Auffangbehälter und steht dann dem Verbraucher zur Verfügung. Zur Abdichtung gegen Schmutz oder Staubeinfall wird der Deckel mit Hilfe seines Dichtkonus oben auf den Trichter gesetzt.

Bei einer bevorzugten ersten Ausführungsform der Erfindung ist vorgesehen, daß der Trichter nahezu vollständig im Auffangbehälter angeordnet ist, die Ausbuchtung in der ausgießseitigen Trichterwandung im eingesetzten Zustand einen Ausgießdurchgang beläßt und das griffseitige Ansatzstück des Trichters im Griff des Auffangbehälters angeordnet ist. Bei dieser Ausführungsform ist der Schwerpunkt besonders günstig beeinflußt, denn der Trichter sitzt tief im Auffangbehälter, so daß sich auch dann bereits eine stabile Lage der Wasserreinigungsvorrichtung ergibt, wenn zu Beginn des Reinigungsvorganges die gesamte Flüssigkeit sich noch im Trichter befindet. Das Ausgießen wird in diesem Falle durch die besondere Anordnung der Ausbuchtung im unteren Teil der Trichterwandung begünstigt. Dadurch, daß erfindungsgemäß auch dann ein Ausgießdurchgang aus dem Volumen des Auffangbehälters zu dessen Ausgießtülle hinten belassen bleibt, wenn der Trichter vollständig im Auffangbehälter aufgenommen ist, braucht der Trichter nicht herausgekippt zu werden. Auch dies dient der kompakten Ausgestaltung der neuen Wasserreinigungsvorrichtung und dem besseren Gebrauch für den Benutzer, zumal ein gefüllter Trichter im allgemeinen nicht einfach zu bewegen ist. Das griffseitige Ansatzstück am Trichter wirkt sich auch bei Ausgießen günstig aus, weil beim Griff am Auffangbehälter häufig der Daumen oben auf das gerade Teil des Griffes zu liegen kommt, unter welchem sich gerade das Ansatzstück des Trichters befindet. Mit anderen Worten wird durch den Daumendruck damit auch der Trichter gut an seinem Platz gehalten.

Vorteilhaft ist gemäß der Erfindung, wenn im Hinblick auf die vorstehend beschriebene erste bevorzugte Ausführungsform der obere Rand des Auffangbehälters zur Bildung der Ausgießtülle als zur Achse des Behälters schräg angesetzter Kegelstumpf ausgebildet ist und der Trichter im oberen Teil eine entsprechend angepaßte kegelstumpfförmige Außenfläche aufweist, in welche sich ausgießseitig die Ausbuchtung befindet. Der gesamte obere Rand des Auffangbehälters ist – vorzugsweise über den gesamten Winkelbereich von 360°, wenn man von oben in den Auffangbehälter hineinblickt – als schräger Kegelstumpf ausgebildet, so daß sich eine breite Ausgießtülle ergibt. Es hat sich gezeigt, daß hierdurch die gereinigte Flüssigkeit gut über den Rand ablaufen kann und ein gutes Zentrieren des Ausgießstrahles möglich ist. Während der obere kegelstumpfförmige Rand des Auffangbehälters auf der dem Griff gegenüberliegenden Seite die erwünschte, breite Ausgießtülle ergibt, dient der hintere griffseitige Teil zugleich der Aufnahmefläche für den entsprechend ausgeformten Trichter.

Eine zweite bevorzugte Ausführungsform der Erfindung ist dadurch gekennzeichnet, daß die Ausgießtülle des Auffangbehälters durch einen im Vergleich zu letzterem steilen und kurzen Kegelstumpf gebildet ist, der so schräg angesetzt ist, daß seine Grundfläche einen Winkel von 100° bis 170°, vorzugsweise etwa 150°, mit der oberen Grundfläche längs der Oberkante des Auffangbehälters einschließt. Man kann sich hier einen Auffangbehälter vorstellen, der nahezu zylindrische Gestalt mit nur schwacher Konizität, sich nach oben erweiternd, hat. Die Oberkante dieses Auffangbehälters liegt hierbei etwa parallel zur Standfläche des Behälters. Zu dieser etwa horizontalen Ebene liegt die Ebene des kurzen Kegelstumpfes der Ausgießtülle unter einem Winkel wie angegeben. Auch hierdurch erreicht man eine weite Ausgießtülle mit den günstigen Gießeigenschaften und den vorstehend bereits beschriebenen Vorteilen. Bei dieser zweiten Ausführungsform dient der hintere und größere Teil der Oberkante des Auffangbehälters der Aufnahme des Trichters. Hierdurch ist eine besonders günstige Halterung auch dann gewährleistet, wenn erfindungsgemäß ferner vorgesehen ist, daß der Trichter etwa zur Hälfte im Auffangbehälter angeordnet ist, auf dieser halben Höhe ein den Trichter umlaufender Auflageflansch angebracht ist und die aus dem Auffangbehälter herausstehende obere Trichterwandung durch einen schiefen Kegelstumpf derart gebildet ist, daß ausgießseitig die Wandung höher liegt als griffseitig. Durch den Auflageflansch und den halb aus dem Auffangbehälter nach oben herausstehhenden Trichter kann entweder der Auffangbehälter kürzer und kompakter aufgebaut werden, oder es ist bei gleicher Höhe wie bei der anderen Ausführungsform ein größeres Wasservolumen zu speichern. Durch das Hochziehen der ausgießseitigen Wandung des oberen schiefen Kegelstumpfes läuft auch dann Flüssigkeit nicht aus dem Trichter heraus, wenn dieser beim Ausgießen des Behälters schräg gestellt wird.

Die ausgießseitig höher gezogene Wandung am Trichter ist bei weiterer vorteilhafter Ausgestaltung der Erfindung nach vorn zur Ausgießtülle des Auffangbehälters hin und nach unten herausgezogen, wobei erfindungsgemäß der Auflageflansch am Trichter ausgießseitig zu einer Ausgießtüllenabdeckung vorgezogen ist. Die das Herausschwappen von Wasser verhindernde hochgezogene Wandung, wie vorstehend beschrieben, kann zusammen mit dem Auflageflansch als Schmutz- bzw. Staubabdeckung über die gesamte Ausgießtülle heruntergezogen sein. Dadurch ist allerdings der Auffangbehälter oben im wesentlichen abgedeckt, so daß es erfindungsgemäß zweckmäßig ist, wenn ferner das Ansatzstück am Trichter als Kipphebel zum Herauskippen des Trichters aus dem Auffangbehälter ausgebildet ist. Der Kipphebel wird vorzugsweise gegenüber der Horizontalen schräg angestellt sein, beispielsweise in Seitenansicht etwa in Form eines V, wobei die Spitze des V den Drehpunkt bildet. Beim Ausgießen stützt sich der Daumen des Benutzers auf dem Kipphebel ab, so daß bei Aufbringen von Druck der Trichter abgehoben und die Ausgießtülle geöffnet wird. Durch die exzentrische Anordnung der Bodenöffnung im Trichter und die entsprechend exzentrische Anordnung der Filterpatrone ergibt sich der weitere Vorteil, daß beim Herauskippen des Trichters aus dem Auffangbehälter die Patrone nicht mit Wandungen des Auffangbehälters in Berührung gelangt, weil der Kippweg grösser wird.

Vorteilhaft ist es für beide hier beschriebene Ausführungsformen, wenn erfindungsgemäß im Griffknopf am Deckel eine Greifnut angebracht ist. Diese unterstützt die leichte Handhabung durch den Endverbraucher, zumal der Deckel durch einen strammen Sitz verhältnismäßig fest auf dem Trichter sitzt. Dies hat den Vorteil, daß bei vorzeitigem Ausgießen, wenn sich noch zu reinigende Flüssigkeit im Trichter befindet, diese auch beim schrägen Kippen zusammen mit dem Auffangbehälter, bevor noch der Trichter aus dem Auffangbehälter herausgekippt ist, nicht allzu leicht herausschwappt. Andererseits erlaubt die Greifnut ein Abziehen des Deckels vom Trichter ohne Kraftaufwand.

Zweckmäßig ist es gemäß der Erfindung ferner, wenn in der Oberkante des Auffangbehälters, vorzugsweise neben dem Griff, eine Entlüftungsnut angeordnet ist. Da der Trichter durch die an die Wandungen des Auffangbehälters passend ausgestalteten Trichterwandungen verhältnismäßig dichtend auf dem Auffangbehälter aufliegt, könnte das gefilterte Wasser nur langsam in den Auffangbehälter einlaufen, weil insbesondere bei der Ausführungsform ohne den verbleibenden Ausgießkanal keine Luft abströmen könnte. Dies ist mit Vorteil durch die Entlüftungsnut gewährleistet.

Ähnlich ist es von Vorteil, wenn erfindungsgemäß im Deckel eine Entlüftungsöffnung angebracht ist. Ein solches Loch verhindert ein Vakuum-Saugen im Trichter, wenn zu reinigendes Wasser durch die Filterpatrone in den Auffangbehälter laufen soll.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen:

Figuren 1 bis 5 eine erste und

Figuren 6 bis 10 eine zweite Ausführungsform der Erfindung, wobei zeigen:

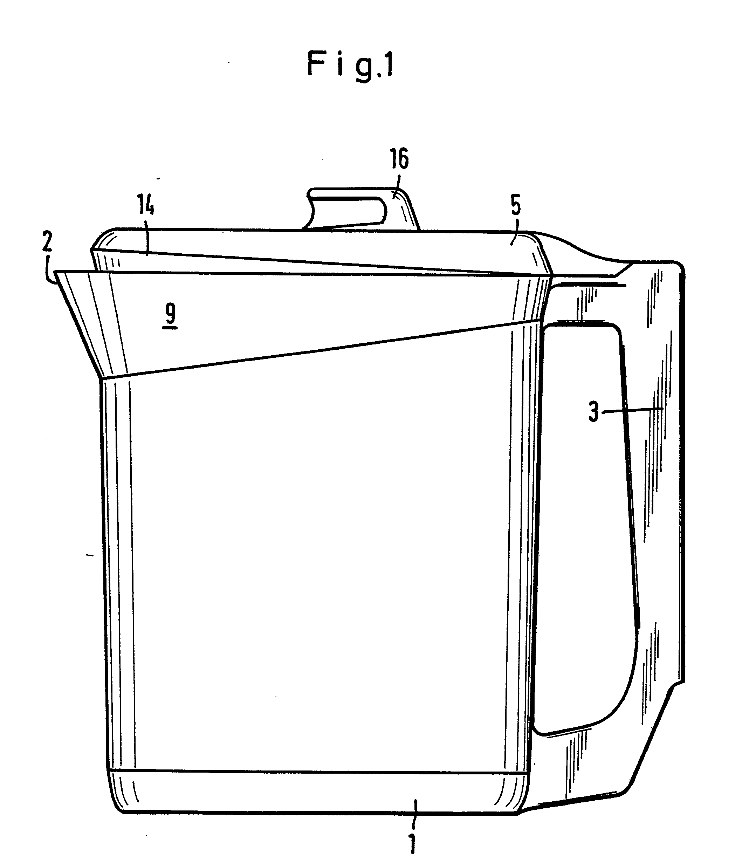

Figur 1 die Seitenansicht der Gesamtvorrichtung,

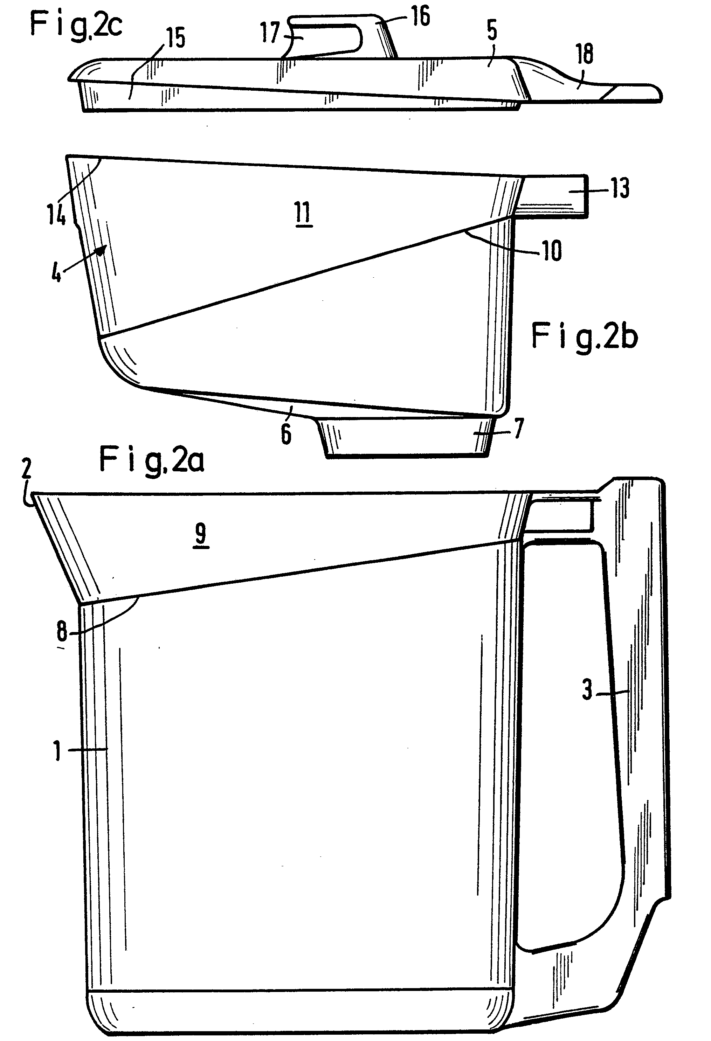

Figuren 2a bis 2c die drei Teile der Wasserreinigungsvorrichtung, auseinandergezogen,

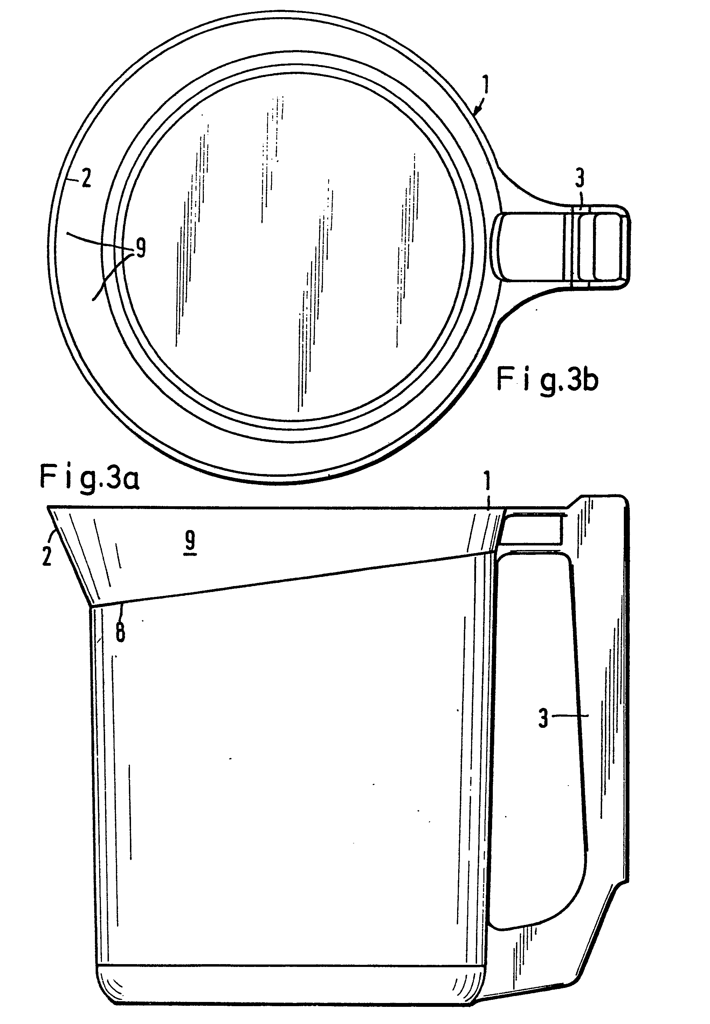

Figur 3a eine schematische Seitenansicht des Auffangbehälters, Figur 3b eine Draufsicht auf denselben,

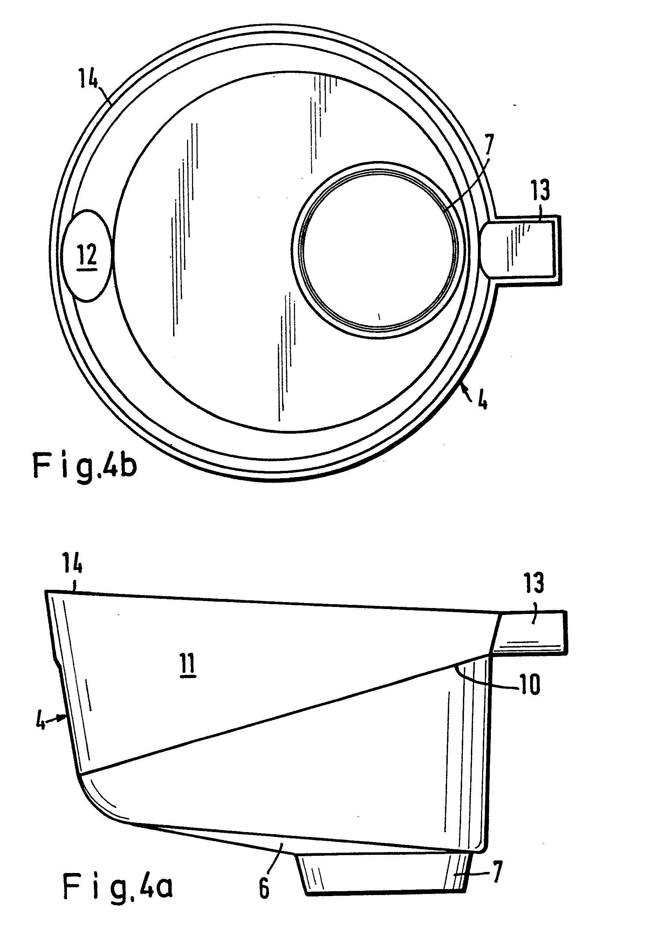

Figur 4a eine schematische Seitenansicht des Trichters,

Figur 4b eine Draufsicht auf denselben,

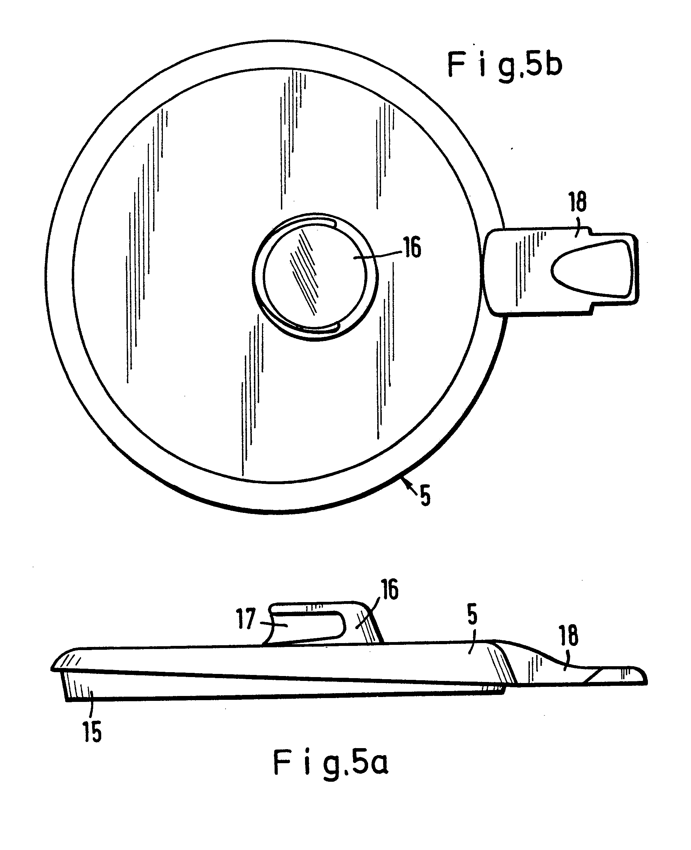

Figur 5a eine schematische Seitenansicht des Deckels,

Figur 5b eine Draufsicht auf denselben;

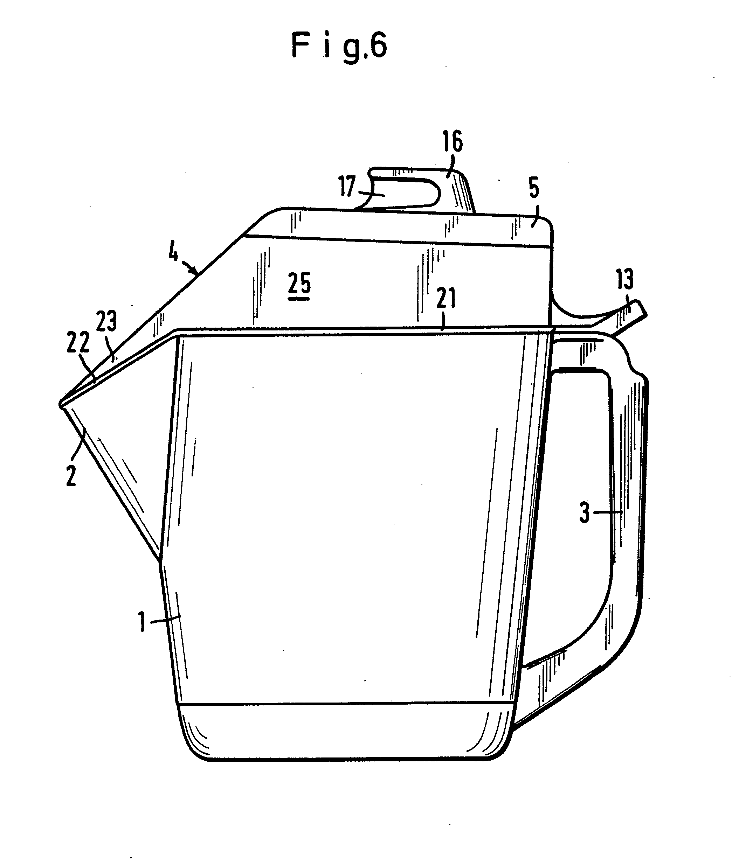

Figur 6 eine Seitenansicht der gesamten Wasserreinigungsvorrichtung der zweiten Ausführungsform im zusammengesetzten Zustand,

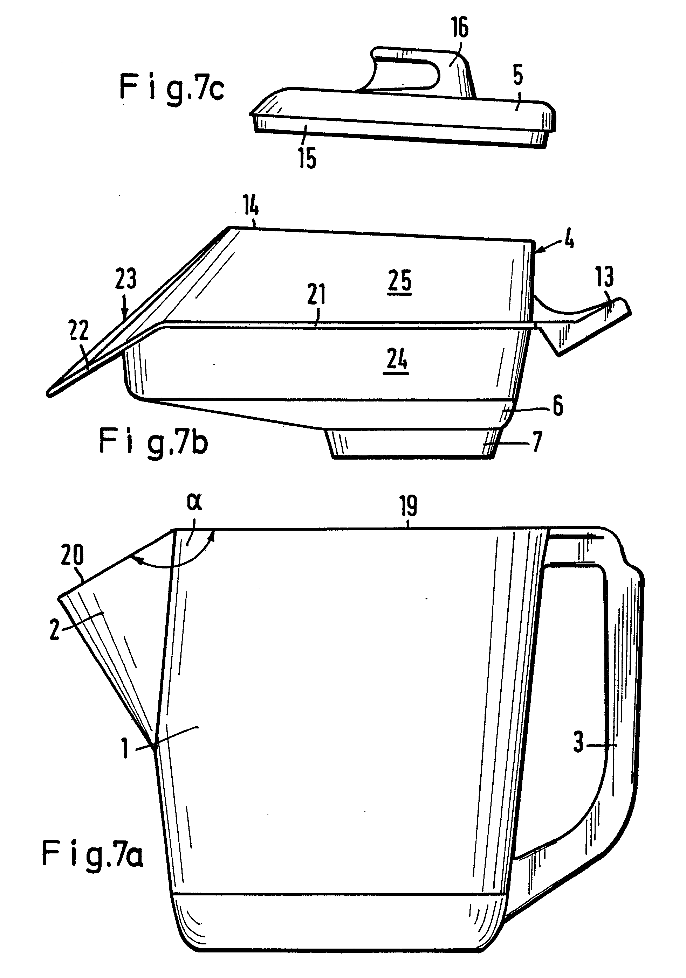

Figuren 7a bis 7c die Vorrichtung der Figur 6, wobei jedoch die drei Teile auseinandergezogen dargestellt sind,

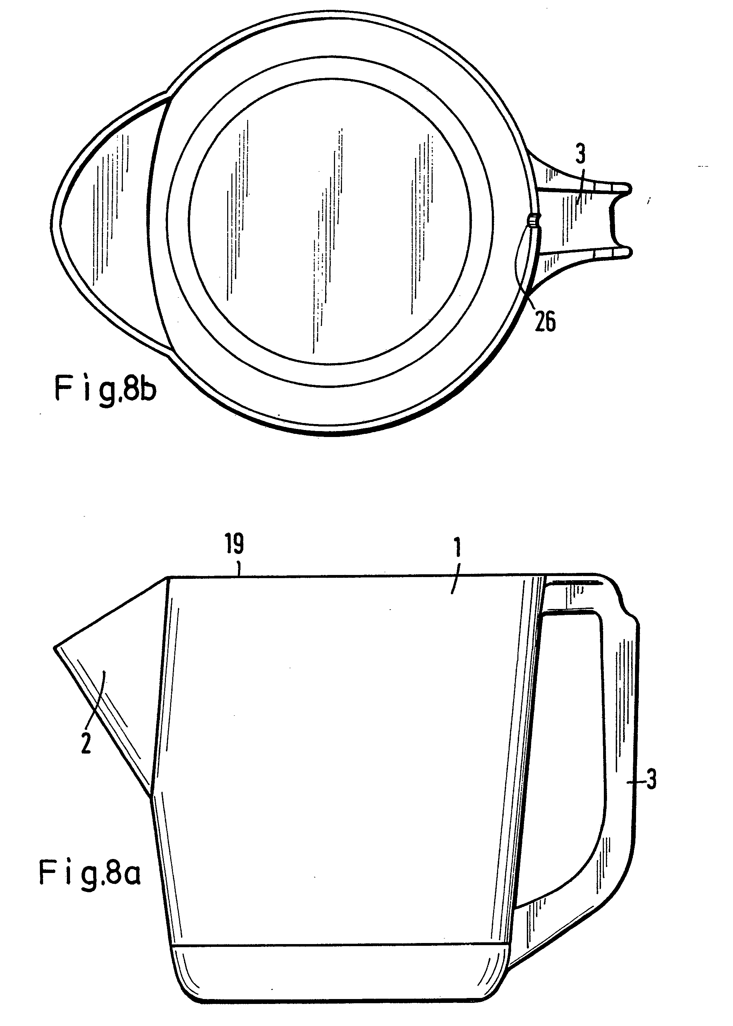

Figur 8a die Seitenansicht des Auffangbehälters der zweiten Ausführungsform,

Figur 8b die Draufsicht auf denselben,

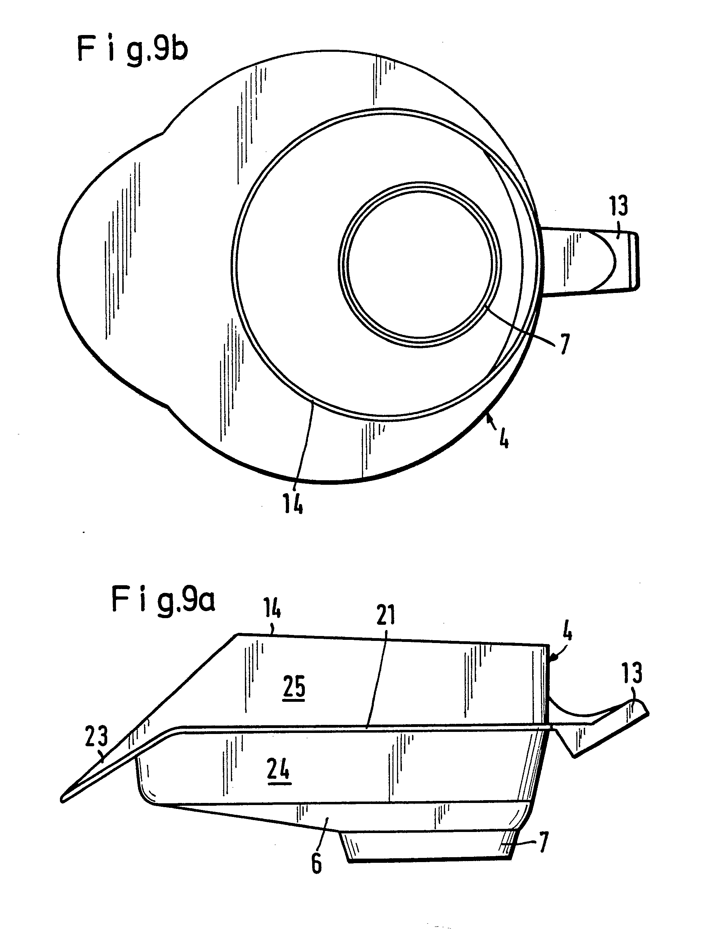

Figur 9a die schematische Seitenansicht des Trichters der zweiten Ausführungsform,

Figur 9b die Draufsicht auf denselben,

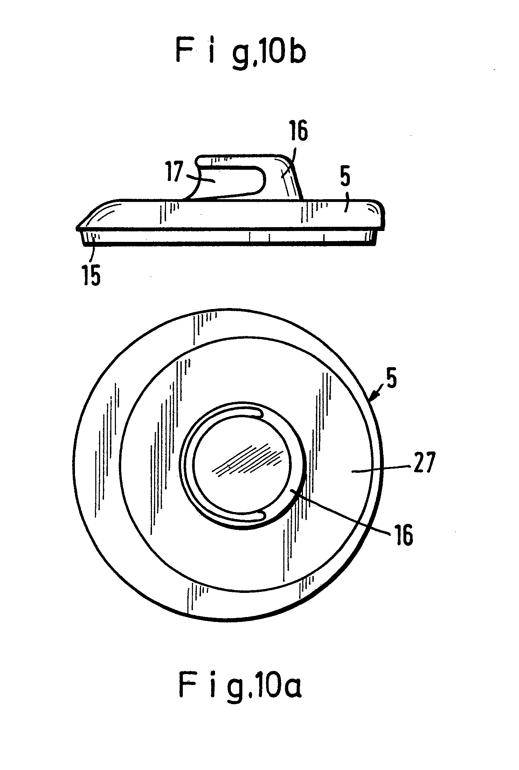

Figur 10a die Draufsicht auf den Deckel und

Figur 10b die Seitenansicht desselben.

Die Wasserreinigungsvorrichtung beider Ausführungsformen besteht aus dem Auffangbehälter 1, an welchem vorn die Ausgießtülle 2 und hinten der Griff 3 angebracht ist, ferner dem Trichter 4 und dem den Trichter verschließenden Deckel 5. Am Boden 6 des Trichters 4 ist eine Bodenöffnung 7 angeformt, in welche die ein Reinigungsmittel enthaltende, nicht dargestellte Filterpatrone klemmend eingedrückt werden kann. Alle Teile der Wasserreinigungsvorrichtung bestehen aus Kunststoff und sind einstückig geformt.

Zunächst wird die erste Ausführungsform anhand der Figuren 1 bis 5 beschrieben. Man sieht aus den Figuren 1, 2a und 3a die nahezu zylindrische Form des Auffangbehälters 1, der aus Fertigungsgründen nur leicht konisch, sich nach oben erweiternd, ausgeformt ist. Der obere Teil des Griffes 3 ist hohl ausgebildet und vorzugsweise transparent. Man kann auch den gesamten Griff 3 als durchsichtigen Hohlkörper ausbilden, um somit eine Anzeige des Wasserstandes im Auffangbehälter 1 zu haben, sofern dieser nicht transparent ist. Gemäß Figuren 2a und 3a trennt die Linie 8 den unteren Kegelstumpf bzw. die Zylindermantelfläche des Auffangbehälters 1 von dem oben schräg angesetzten, kegelstumpfförmigen Rand 9. Denkt man sich im Zentrum des Auffangbehälters 1 im Lot die nicht dargestellte Achse angeordnet, dann liegt die Achse des schiefen Kegelstumpfes des oberen Randes 9 des Auffangbehälters 1 unter einem Winkel zur Behälterachse, vorzugsweise zwischen 5° und 30°, bevorzugt zwischen 10° und 20°. Durch diesen oberen Rand 9 und die Schiefe seines Kegelstumpfes, dessen Achse zur Ausgießtülle 2 hingeneigt ist, wird die Ausgießtülle gebildet.

Besonders aus der Darstellung der Figuren 2a und 2b erkennt man in diesem Zusammenhang, daß (getrennt durch die Linie 10 im Trichter 4) die darüberliegende Trichterwandung, d. h. der Trichter 4 im oberen Teil, eine entsprechend angepaßte kegelstumpfförmige Außenfläche 11 aufweist. Beim Einsetzen des Trichters 4 in den Auffangbehälter 1 legt sich diese kegelstumpfförmige Außenfläche 11 an den in gleicher Weise ausgestalteten kegelstumpfförmigen oberen Rand 9 des Auffangbehälters 1 an.

Da ausgießseitig (in den Figuren links) die erwähnte Ausbuchtung 12 (Figur 4b) angeordnet ist, wird bei dieser Ausführungsform ein Ausgießdurchgang mit Hilfe dieser Ausbuchtung 12 auch dann frei belassen, wenn sich der Trichter 4 vollständig im Auffangbehälter 1 gemäß Darstellungen in Figur 1 befindet. In diesem Zustand befindet sich auch das griffseitige Ansatzstück 13 des Trichters 4 im Griff 3.

Während die Oberkante des oberen Randes 9 des Auffangbehälters 1 verbindende Ebene etwa horizontal liegt, sofern die Vorrichtung auf einer horizontalen Unterfläche steht, ist die durch die Oberkante 14 des Trichters 4 gebildete Ebene ersichtlich so unter einem Winkel gegen die Horizontale angestellt, daß das ausgießseitige Ende (links) höher als das griffseitige, gegenüberliegende Ende liegt. Dadurch wird ein Überschwappen der im Trichter 4 befindlichen Flüssigkeit auch dann verringert, wenn die gesamte Vorrichtung im zusammengebauten Zustand nach Figur 1 zum Ausgießen gekippt wird.

Dieses Ausschwappen wird in erster Linie dadurch ausgeschaltet, daß der Deckel 5 mit dem Dichtkonus 15 stramm in der Oberkante 14 des Trichters 4 eingesteckt ist. Weil der Dichtkonus 15 des Deckels 5 ausgießseitig höher als griffseitig ausgebildet ist, liegt die durch die obere Fläche des Deckels 5 gelegte Ebene wiederum horizontal und parallel zur Standfläche. Auf der Oberseite des Deckels 5 ist ein Griffknopf 16 mit Greifnut 17 befestigt. Außerdem befindet sich griffseitig am Deckel 5 ein Ansatzteil 18, welches zur Erleichterung des Zentrierens des Gesamtaufbaues bzw. zum richtigen Zusammensetzen in das hintere obere Teil des Griffes 3 am Auffangbehälter 1 eingesetzt wird.

Viele Merkmale der in Verbindung mit der ersten Ausführungsform anhand der Figuren 1 bis 5 gezeigten Vorrichtung finden sich auch bei der zweiten Ausführungsform wieder, die nun anhand der Figuren 6 bis 10 erläutert wird. Gleiche Teile tragen gleiche Bezugszahlen, so daß die übereinstimmende Beschreibung hier nicht wiederholt werden muß.

Der Auffangbehälter 1 ist zwar ebenfalls annähernd zylindrisch ausgestaltet, man erkennt beim Vergleich der Figuren 1 und 6 aber doch, daß der Öffnungskegel bei der zweiten Ausführungsform etwas größer als der bei der ersten ist.

Der insbesondere in Figur 7a und 8a beschriebene Auffangbehälter 1 weist eine Oberkante 19 auf, die in einer zur Standebene parallelen, vorzugsweise horizontalen Ebene liegt. Die Ausgießtülle 2 dieser zweiten Ausführungsform vorn am Auffangbehälter 1 wird durch einen kurzen Kegelstumpf gebildet, der im Vergleich zum Kegelstumpf des Auffangbehälters 1 steil ist. Außerdem liegt seine Mittelachse unter einem Winkel zur Hauptachse des Auffangbehälters 1 derart, daß sich in Figur 7a die nach unten herausgezogene Ausgießtülle 2 ergibt. Auf diese Weise schließen die durch die Oberkante 19 des Auffangbehälters 1 gelegte Ebene und die durch die Grundfläche 20 der Ausgießtülle gelegte Ebene einen Winkel α von etwa 150° ein.

Auch bei der zweiten Ausführungsform ist der Trichter 4 an die Gestalt der oberen Wandungen des Auffangbehälters 1 angepaßt. Der Trichter 4 ist gemäß Figuren 7b und 9 jedoch als Aufsatz für den Auffangbehälter 1 ausgebildet und weist einen Auflageflansch 21 auf, der ausgießseitig nach vorn bei 22 als Ausgießtüllenabdeckung 23 ausgebildet ist. Durch diesen Auflageflansch 21 wird die Trichterwandung insgesamt in zwei Teile geteilt, nämlich den unteren Teil 24 und den oberen Teil 25. Der untere Teil 24 der Trichterwandung ist gemäß Darstellung in Figur 6 im Auffangbehälter 1 angeordnet, und der obere Teil 25 der Trichterwandung ragt heraus. Die Oberkante 14 des Trichters 4 ist ausgießseitig wiederum hochgezogen, so daß die im Trichter 4 befindliche Flüssigkeit auch dann nicht ohne weiteres herausschwappen kann, wenn der gesamte Behälter in der Lage der Figur 6 etwas gekippt wird. Das leichte Hochziehen der Oberkante 14 des Trichters 4 kann diese Wirkung natürlich nur begünstigen und eine Hilfsmaßnahme darstellen, denn grundsätzlich soll der Trichter 4 bei der zweiten Ausführungsform mit Hilfe des als Kipphebel ausgebildeten Ansatzstückes 13 aus dem Auffangbehälter 1 herausgekippt werden.

In der Oberkante 19 des Auffangbehälters 1 ist neben dem Griff 3 außerdem eine Entlüftungsnut 26 (Figur 8b) angebracht, um ein Entweichen von Luft aus dem Auffangbehälter 1 zu ermöglichen, wenn Flüssigkeit durch die Filterpatrone in den Behälter 1 einläuft. Zu ähnlichem Zweck ist im Deckel 5 eine Entlüftungsöffnung 27 (Figur 10a) vorgesehen.

Durch den weiten, kegelförmigen Ausguß 2 wird ein bequemes und tropfenfreies Ausgießen mit günstiger Abrißkante gewährleistet. Der Trichter 4 kann staubfrei abgedeckt werden, auch bei der nach vorn intern herausgezogenen Ausgießtülle 2 der zweiten Ausführungsform, dort nämlich durch die Tüllenabdeckung 23. Auch wird beim Transport ein Überschwappen von Wasser hierdurch verhindert. Durch den tieferliegenden Schwerpunkt ergibt sich eine leichtere und sichere Handhabung der geamten Vorrichtung auch bei gefülltem Trichter.

Bei der Anordnung nach Fig. 1 ergibt sich ferner der Vorteil, daß sowohl die Überlaufkante des Auffangbehälters 1 als auch die des Trichters 4 gleich hoch sind. Die Seitenansicht der kompletten Vorrichtung zeigt in Fig. 1, wie auf der Seite des Griffes 3 die Oberkante 14 des Trichters 4 nach rechts unten auf das Niveau bzw. die Oberkante des Auffangbehälters 1 zuläuft bzw. mit dieser abschließt. Unter Berücksichtigung des Prinzips der kommunizierenden Röhren ergibt sich aufgrund der gleich hohen Überlaufkanten der beiden Behältnisse der Vorteil, daß das Wasser praktisch niemals aus dem Auffangbehälter 1 überlaufen kann, wenn in den Trichter 4 zuviel nachgegossen wurde. Nimmt man nämlich an, daß der Auffangbehälter 1 nicht transparent und bereits zur Hälfte mit Wasser gefüllt ist, und beachtet der andere Benutzer den Wasserstand im Auffangbehälter nicht, sondern gießt er erneut Wasser in den Trichter zu, dann kann dennoch der Auffangbehälter nicht überlaufen, denn es kommt stets zu einem Druckausgleich zwischen Trichter und Auffangbehälter, und deshalb wird der Trichter das gleiche Wasserniveau wie der Auffangbehälter haben, wenn er gemäß Darstellung in Fig. 1 im eingesetzten Zustand ist.

Mit anderen Worten kann man durch die erfindungsgemäße Anordnung den Trichter 4 immer nur bis zur Oberkante des Auffangbehälters 1 befüllen. Ein unbeabsichtigtes Überlaufen ist verhindert.

## Patentansprüche

1. Vorrichtung zur Wasserreinigung, bestehend aus einem Auffangbehälter (1) mit Ausgießtülle (2) und Griff (3), einem Trichter (4) und einem den Trichter verschliessenden Deckel (5), wobei am Boden (6) des Trichters (4) eine Öffnung (7) zur Aufnahme einer ein Reinigungsmittel enthaltenden Filterpatrone angebracht ist, dadurch gekennzeichnet, daß der Trichter (4) herausnehmbar wenigstens teilweise in dem annähernd zylindrisch geformten Auffangbehälter (1) angeordnet ist und in passender Weise annähernd zylinderförmige Trichterwandungen (11; 24), ein für die Anordnung am angeformten Griff (3) des Auffangbehälters (1) angeordnetes Ansatzstück (13) und die Bodenöffnung (7) exzentrisch auf der Seite des Ansatzstückes (13) aufweist und am ausgießseitigen Ende im Bereich der am Auffangbehälter (1) angeformten, weiten, kegelförmigen Ausgießtülle (2) mit einer Ausbuchtung (12) versehen ist und daß der Deckel (5) einen unteren Dichtkonus (15), auf der Oberseite einen Griffknopf (16) und vorzugsweise hinten für die wenigstens teilweise Anordnung im Griff (3) des Auffangbehälters (1) ein Ansatzteil (18) aufweist.

2. Vorrichtung nach Anspruch 1, dadurch gekennzeichnet, daß der Trichter (4) nahezu vollständig im Auffangbehälter (1) angeordnet ist, die Ausbuchtung (12) in der ausgießseitigen Trichterwandung (11) im eingesetzten Zustand einen Ausgießdurchgang beläßt und das griffseitige Ansatzstück (13) des Trichters (4) im Griff (3) des Auffangbehälters (1) angeordnet ist.

3. Vorrichtung nach Anspruch 1 oder 2, dadurch gekennzeichnet, daß der obere Rand (9) des Auffangbehälters (1) zur Bildung der Ausgießtülle (2) als zur Achse des Behälters (1) schräg angesetzter Kegelstumpf ausgebildet ist und daß der Trichter (4) im oberen Teil eine entsprechend angepaßte kegelstumpfförmige Außenfläche (11) aufweist, in welcher sich ausgießseitig die Ausbuchtung (12) befindet.

4. Vorrichtung nach Anspruch 1, dadurch gekennzeichnet, daß die Ausgießtülle (2) des Auffangbehälters (1) durch einen im Vergleich zu letzterem steilen und kurzen Kegelstumpf gebildet ist, der so schräg angesetzt ist, daß seine Grundfläche (20) einen Winkel (α) von 100° bis 170°, vorzugsweise etwa 150°, mit der oberen Grundfläche längs der Oberkante (19) des Auffangbehälters (1) einschließt.

5. Vorrichtung nach Anspruch 1 oder 4, dadurch gekennzeichnet, daß der Trichter (4) etwa zur Hälfte im Auffangbehälter (1) angeordnet ist, auf dieser halben Höhe ein den Trichter (4) umlaufender Auflageflansch (21) angebracht ist und daß die aus dem Auffangbehälter (1) herausstehende obere Trichterwandung (25) durch einen schiefen Kegelstumpf derart gebildet ist, daß ausgießseitig die Wandung höher liegt als griffseitig.

6. Vorrichtung nach Anspruch 1, 4 oder 5, dadurch gekennzeichnet, daß der Auflageflansch (21) am Trichter (4) ausgießseitig zu einer Ausgießtüllenabdeckung (23) vorgezogen ist.

7. Vorrichtung nach Anspruch 1, 4, 5 oder 6, dadurch gekennzeichnet, daß das Ansatzstück (13) am Trichter (4) als Kipphebel zum Herauskippen des Trichters aus dem Auffangbehälter (1) ausgebildet ist.

8. Vorrichtung nach einem der Ansprüche 1 bis 7, dadurch gekennzeichnet, daß im Griffknopf (16) am Deckel (5) eine Greifnut (17) angebracht ist.

9. Vorrichtung nach einem der Ansprüche 1 bis 8, dadurch gekennzeichnet, daß in der Oberkante (19) des Auffangbehälters (1), vorzugsweise neben dem Griff (16), eine Entlüftungsnut (26) angeordnet ist.

10. Vorrichtung nach einem der Ansprüche 1 bis 9, dadurch gekennzeichnet, daß im Deckel (5) eine Entlüftungsöffnung (27) angebracht ist.

## Claims

Arrangement for water purification, consisting of a collection vessel (1) with a pouring spout (2) and handle (3), a funnel (4) and a lid (5) to cover the funnel, while at the bottom (6) of the funnel (4) an opening (7) is provided for the insertion of a filter cartridge containing a purifyng agent, characterised in that the funnel (4) is removable and is at least partially inserted in the approximately cylindrically shaped collecting vessel (1) and accordingly also has approximately cylindrically shaped funnel walls (11, 24), an attached handle stub (13) for fitting into the handle (3) which is attached to the collecting vessel (1) and that the opening (7) in the bottom is set off-centre towards the side of the handle stub (13) and that on the pouring side near the wide conically shaped pouring spout (2) formed at the collecting vessel (1) a bulge is formed, and that the lid (5) has a packing cone (15) on the underside and a handle knob (16) on the upper side and a handle stub (18) is attached, preferably at the back for at least partial insertion into the handle (3) of the collecting vessel (1).

2. Arrangement according to Claim 1, characterised in that the funnel (4) is nearly completely located inside the collecting vessel (1), that the bulge (12) in the funnel wall (11) on the pouring side in inserted condition leaves a pouring channel and that the handle stub (13) of the funnel (4) is fitted into the handle (3) of the collecting vessel (1).

3. Arrangement according to Claim 1 or 2, characterised in that the upper rim (9) of the collecting vessel (1) for the formation of the pouring spout (2) is shaped as a truncated cone set diagonally to the axis of the vessel (1) and that the funnel (4) in its upper part shows a correspondingly matching truncated cone-shaped outer surface (11), where the bulge (12) is located on the pouring side.

4. Arrangement according to Claim, characterised in that the pouring spout (2) of the collecting vessel (1) is formed, in comparison to the latter, by a steep short truncated cone, which is formed in such a sloping manner that its ground surface (2) encloses an angle (α) of about 100 to 170 degrees, preferably approximately 150 degrees, with the upper surface along the upper rim (19) of the collecting vessel (1).

5. Arrangement in accordance with Claim 1 or 4, characterised in that the funnel (4) is located approximately half inside the collecting vessel (1), that at this half height a flange (21) is affixed all the way around the funnel, and that the funnel wall (25) which protrudes from the collecting vessel (1) is shaped by means of an inclined truncated cone, so that the wall on the pouring side is higher than on the handle side.

6. Arrangement according to Claim 1, 4 or 5, characterised in that the flange (21) on the funnel (4) has been extended on the pouring side to form a cover (23) for the pouring spout.

7. Arrangement according to Claim 1, 4, 5 or 6, characterized in that the handle stub (13) of the funnel (4) has been shaped as a rocking lever for tilting out the funnel from the collecting vessel (1).

8. Arrangement according to one of the Claims 1–7, characterised in that the handle knob (16) of the lid (5) is provided with a groove for gripping.

9. Arrangement according to one of the Claims 1–8, characterised in that the upper edge (19) of the collecting vessel (1), preferably next to the handle (16), a ventilation hole (26) has been provided.

10. Arrangement according to one of the Claims 1–9, characterised in that a ventilation hole (27) is provided in the lid (5).

## Revendications

1. Dispositif pour le traitement d'eau, composé d'un réservoir collecteur (1) avec bec verseur (2) et manche (3), d'un entonnoir (4), et d'un couvercle (5) fermant l'entonnoir, tandis qu'est réalisée au fond (6) de l'entonnoir (4) une ouverture (7) pour recevoir une cartouche de filtre contenant un agent d'épuration, caractérisé en ce que l'entonnoir (4) que l'on peut retirer est au moins partiellement disposé dans le réservoir collecteur (1) de forme approximativement cylindrique et présente de façon adaptée des parois approximativement cylindriques (11, 24), un appendice (13) disposé en vue de son agencement sur le manche (3) conformé du réservoir collecteur (1) et l'ouverture de fond (7) de façon excentrique sur le côté de l'appendice (13) et est pourvu d'un renflement (12) sur l'extrémité côté bec verseur dans la zone du large bec verseur (2) de forme conique conformé sur le réservoir collecteur (1) et en ce que le couvercle (5) présente un cône d'étanchéité inférieur (15), un bouton de prise (16) à la partie supérieure et un appendice (18) de préférence vers l'arrière pour être disposé au moins partiellement dans le manche (3) du réservoir collecteur (1).

2. Dispositif selon la revendication 1, caractérisé en ce que l'entonnoir (4) est presque entièrement disposé dans le réservoir collecteur (1), que le renflement (12) dans la paroi d'entonnoir (11) côté bec verseur dans l'état assemblé laisse un passage de versement et que l'appendice (13) de l'entonnoir (4) côté manche est disposé dans le manche (3) du réservoir collecteur (1).

3. Dispositif selon la revendication 1 ou 2, caractériseé en ce que le bord supérieur (9) du réservoir collecteur (1) est constitué en tronc de cône disposé obliquement par rapport à l'axe du réservoir collecteur (1) pour former le bec verseur (2) et en ce que l'entonnoir (4) présente à la partie supérieure une surface extérieure (1) tronconique adaptée de manière correspondante, surface dans laquelle se trouve le renflement (12) côté bec verseur.

4. Dispositif selon la revendication 1, caractérisé en ce que le bec verseur (2) du réservoir collecteur (1) est constitué par un tronc de cône à angle obtus et court par rapport au précédent, qui est disposé en oblique de telle façon que sa surface de fond (20) forme un angle ($\alpha$) de 100° à 170°, de préférence environ 150°, avec la surface de fond supérieure le long du bord supérieur (19) du réservoir collecteur (1).

5. Dispositif selon la revendication 1 ou 4, caractérisé en ce que l'entonnoir (4) est disposé environ jusqu'à moitié dans le réservoir collecteur (1), qu'un rebord d'appui (21) entourant l'entonnoir (4) est rapporté sur cette demi-hauteur et en ce que la paroi supérieure (25) d'entonnoir qui fait saillie hors du réservoir collecteur (1) est constituée par un tronc de cône oblique de sorte que la paroi du côté bec verseur est plus haute que du côté manche.

6. Dispositif selon la revendication 1, 4 ou 5, caractérisé en ce que le rebord d'appui (21) sur l'entonnoir (4) côté bec verseur est étirée en un couvercle de bec verseur (23).

7. Diepositif selon la revendication 1, 4, 5 ou 6, caractérisé en ce que l'appendice (13) sur l'entonnoir (4) côté bec verseur est constitué comme levier de basculement en vue du basculement de l'entonnoir hors du réservoir collecteur (1).

8. Dispositif selon l'une des revendications 1 à 7, caractérisé en ce qu'une rainure de prise (17) est ménagée dans le bouton de prise (16) sur le couvercle (5).

9. Dispositif selon l'une des revendications 1 à 8, caractérisé en ce qu'est ménagée une rainure de purge d'air (26) dans le bord supérieur (19) du réservoir collecteur (1), de préférence près de la prise (16).

10. Dispositif selon l'une des revendications 1 à 9, caractérisé en ce qu'une ouverture de purge d'air (27) est ménagée dans le couvercle (5).

# Fig.1

Fig.2c

15    17    16    5    18

Fig.2b

14    11    13
4    10

6    7

Fig.2a

2    9

8

3

1

11

Fig.3b

Fig.3a

Fig.4b

Fig.4a

Fig.5b

18

16

5

16

17

5

18

15

Fig.5a

# F i g.6

Fig.7c

16

5

15

Fig.7b

14

23

22

4

25

21

13

24

6

7

Fig.7a

α

19

20

2

1

3

Fig.8b

Fig.8a

F i g.9b

13

7

4

14

F i g.9a

14   21   4

25   13

23

24

6   7

# F i g.10b

# F i g.10a